# FASCICULE DE BREVET EUROPEEN

(11) **EP 4 034 855 B1**
(45) Date de publication et mention de la délivrance du brevet: **08.11.2023**
(21) Numéro de dépôt: 20775348.4
(22) Date de dépôt: 25.09.2020
(51) Int. Cl.: G01L 9/00, G01L 13/02, G01M 3/26

(54) **CAPTEUR DE PRESSION DIFFERENTIELLE ET DISPOSITIF DE DETECTION COMPRENANT UN TEL CAPTEUR**
DIFFERENZDRUCKSENSOR UND DETEKTIONSVORRICHTUNG MIT EINEM SOLCHEN SENSOR
DIFFERENTIAL PRESSURE SENSOR AND DETECTION DEVICE COMPRISING SUCH A SENSOR

(30) Priorité: 26.09.2019 FR 1910654
(43) Date de publication de la demande: 03.08.2022
(73) Titulaire: ATEQ, 78340 Les Clayes-sous-Bois (FR)
(72) Inventeur: CHAMPION, Cédric, 78340 Les Clayes-sous-Bois (FR); LEMARTINEL, Christophe, 78340 Les Clayes-sous-Bois (FR)
(74) Mandataire: Vidon Brevets & Stratégie
(86) Numéro de dépôt international: PCT/EP2020/076894
(87) Numéro de publication internationale: WO 2021/058738

(56) Documents cités:
- FR-A1- 2 607 927
- FR-A1- 2 849 193
- GB-A- 2 127 971
- US-A- 2 751 530
- US-A- 5 623 102

## Description

### Domaine technique

La présente invention se rapporte au domaine des dispositifs de détection de fuites ou de mesure d'étanchéité. Plus particulièrement, la présente invention se rapporte à un capteur de pression différentielle destiné à être monté dans un tel dispositif.

### Art antérieur

En effet, dans de nombreuses industries, il est nécessaire de pouvoir vérifier si des pièces fabriquées, des emballages, des produits... présentent une fuite (ou formulé autrement de vérifier que les pièces sont étanches) et de pouvoir quantifier ladite fuite.

Il existe différentes méthodes pour procéder à la détection et à la quantification de fuites, telle que la méthode des gaz traceurs, la méthode de la piscine (ou du bac à eau) ou la méthode par variation de pression.

Néanmoins, si la fuite est corrélée à une différence de pression supérieure à 0,1 Pa/s, alors la méthode par variation de pression est la méthode la plus rapide et la plus économique. En effet, contrairement à la méthode des gaz traceurs, il n'est pas nécessaire d'avoir des bouteilles de gaz pour réaliser une mesure d'étanchéité. De plus, contrairement à la méthode de la piscine à eau, la méthode par variation de pression est rapide et peut s'implémenter dans un processus industriel (sur une ligne de fabrication par exemple).

Ainsi, dans la méthode par variation de pression, l'objet à tester subit une variation de pression maitrisée, et après un temps déterminé (phase de stabilisation), on mesure à nouveau une pression par exemple dans une chambre contenant l'objet qui aura varié si l'objet présente une fuite.

Le document FR 2 849 193 A1 divulgue un exemple de dispositif de détection de fuite permettant de mettre en oeuvre la méthode par variation de pression.

Il est donc ainsi critique d'avoir un capteur de pression capable de mesurer de petites variations de pression et donc indirectement de petites fuites.

Les documents US 2 751 530 A, GB 2 127 971 A et FR 2 607 927 A1 divulguent des exemples de capteurs de pression différentielle de type capacitif.

### Exposé de l'invention

L'invention est définie dans la revendication 1 et concerne ainsi un nouveau type de capteur de pression différentielle pour dispositif de détection de fuite.

Lesdits joints permettent d'assurer l'étanchéité des chambres de test vis-à-vis de l'extérieur. De plus, les joints, de préférence disposés concentriquement, permettent de minimiser les éventuelles variations de volumes des chambres de test.

Selon l'invention, chacun des corps comprend au moins un conduit de fluide débouchant entre lesdits joints.

Ledit conduit de fluide débouchant entre lesdits joints permet notamment de faire varier la pression régnant entre les joints et de l'équilibrer avec la pression régnant dans la chambre de test attenante (c'est-à-dire la chambre de test dont les joints assurent l'étanchéité). Ainsi, le joint intérieur, délimitant directement la chambre de test, ne subit pas de variations de pression (et donc ne se déplace pas).

Selon une autre caractéristique possible, au moins un des corps et/ou la membrane comprend des gorges pour accueillir lesdits joints.

Il est avantageux de prévoir une forme (telle qu'une gorge ou toute autre forme adaptée) pour loger lesdits joints, notamment pour faciliter le positionnement des joints lors de la fabrication dudit capteur, mais également pour limiter le déplacement radial desdits joints et optimiser l'étanchéité procurée par ceux-ci.

Selon une autre caractéristique possible, chacune des paires de joints est disposés de part et d'autre de la membrane.

Selon une autre caractéristique possible, chacune des paires de joints est en contact avec la membrane et au moins un corps du capteur.

Selon une autre caractéristique possible, au moins un desdits corps comprend un organe de mise sous tension de ladite membrane.

Ledit organe de mise sous tension prend la forme, par exemple, d'une saillie ou d'une rondelle qui vient en appui sur la membrane pour mettre celle-ci sous tension, de préférence de manière uniforme.

Selon une autre caractéristique possible, la membrane et lesdits corps sont réalisés dans des matériaux présentant des coefficients de dilatation thermiques sensiblement égaux. Lesdits matériaux sont par exemple du bronze, un alliage bronze-béryllium et/ou de l'inox, etc.

Selon une autre caractéristique possible, au moins une des électrodes présente, d'une part, deux faces d'extrémité opposées, l'une en regard de la membrane et l'autre fixée à l'un des corps, et, d'autre part, une face transversale reliant lesdites faces d'extrémités.

Plus particulièrement, l'électrode présente une forme sensiblement cylindrique ou de disque, et est par exemple réalisée dans un matériau électriquement conducteur, tel que du laiton, du bronze, ou un alliage de cuivre...

Selon une autre caractéristique possible, au moins une des électrodes comprend un trou traversant dont les extrémités débouchent au niveau des faces d'extrémités (opposées) de l'électrode. Selon une autre caractéristique possible, au moins une électrode comprend un logement transversal destiné à accueillir une tige de contact électrique.

Selon une autre caractéristique possible, le trou traversant et le logement transversal communiquent, notamment fluidiquement, l'un avec l'autre.

Selon une autre caractéristique possible, au moins un des corps est réalisé par matriçage.

Le fait de réaliser un desdits corps par matriçage améliore la rigidité mécanique de la pièce et permet notamment au capteur de supporter de plus grandes valeurs de pression, tout en permettant d'avoir des pièces moins massives. Par ailleurs, le matriçage est un procédé plus écologique, car entrainant moins de pertes de matière qu'un usinage classique.

Selon une autre caractéristique possible, ledit capteur comprend une tige de contact électrique en contact avec ladite électrode (notamment au niveau du logement transversal aménagé dans l'électrode).

Selon une autre caractéristique possible, ledit capteur comprend un connecteur électrique.

Ledit connecteur électrique est relié, d'une part, à la tige de contact électrique, et, d'autre part, à des entités électroniques de mesure de grandeurs électriques, telles qu'une capacité, une résistance, etc.

Selon une autre caractéristique possible, ladite tige comprend une extrémité présentant une forme polygonale, par exemple carrée ou rectangulaire.

La forme polygonale de l'extrémité de la tige est destinée à être montée serrée (ou emmanchée en force) dans le logement transversal de ladite électrode et à garantir un bon contact électrique entre l'électrode et ladite tige.

Selon une autre caractéristique possible, chacun desdits corps comprend un canal de fluide débouchant dans leur chambre de test respective.

Ledit canal débouche de préférence tangentiellement à la paroi délimitant la chambre de test. Selon une autre caractéristique possible, ledit capteur comprend une pièce d'interface qui est montée sur lesdits corps et qui comprend des canaux de fluide dans lesquels sont disposés au moins un piège à eau (ou dispositif de rétention d'eau).

L'invention concerne également un dispositif de détection de fuites, caractérisé en ce qu'il comprend un capteur tel que décrit ci-dessus.

### Présentation des figures

L'invention sera mieux comprise, et d'autres buts, détails, caractéristiques et avantages de celles-ci apparaîtront plus clairement au cours de la description suivante de modes de réalisation particuliers de l'invention, donnée uniquement à titre illustratif et non limitatif, en référence aux dessins annexés, sur lesquels :
[Fig 1] est une représentation schématique en perspective d'un capteur de pression différentielle selon l'invention ;
[Fig 2] est une vue de coupe du capteur de la figure 1 ;
[Fig 3] est une vue schématique et en perspective d'un corps du capteur du capteur de la figure 1 ; [Fig 4] est une vue agrandie et en coupe d'une partie du capteur de la figure 1 ;
[Fig 4a] est une vue agrandie et partielle de la figure 3.

### Description détaillée de modes de réalisation de l'invention

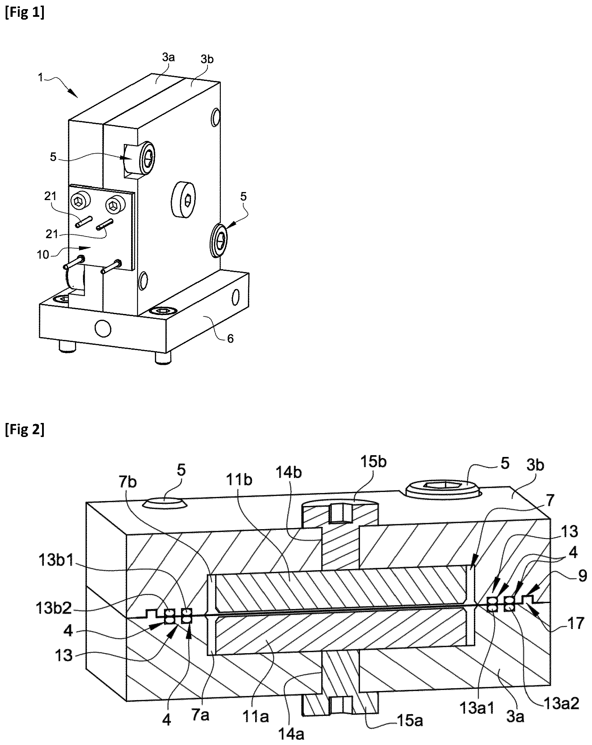

La figure 1 est une représentation schématique, en perspective, d'un capteur 1 de pression différentielle selon l'invention.

Plus particulièrement, ledit capteur 1 comprend au moins deux corps 3a et 3b fixés l'un à l'autre par des moyens de fixation 5, tels que des vis. Le capteur 1 comprend également une pièce d'interface 6 et un connecteur électrique 10 qui sont fixés sur lesdits corps 3a et 3b.

Chacun desdits corps 3a et 3b est évidé, de telle manière qu'en position montée lesdits corps 3a et 3b délimitent une cavité 7 (cavité interne audit capteur), cette configuration étant plus particulièrement visible à la figure 2 qui est une vue en coupe du capteur 1 représenté à la figure 1. On peut également constater sur la figure 2 que ledit capteur 1 comprend une membrane 9 intercalée entre les deux corps 3a et 3b de manière à scinder en deux sous-parties la cavité 7, ces deux sous-parties définissant respectivement chacune une chambre de test 7a et 7b.

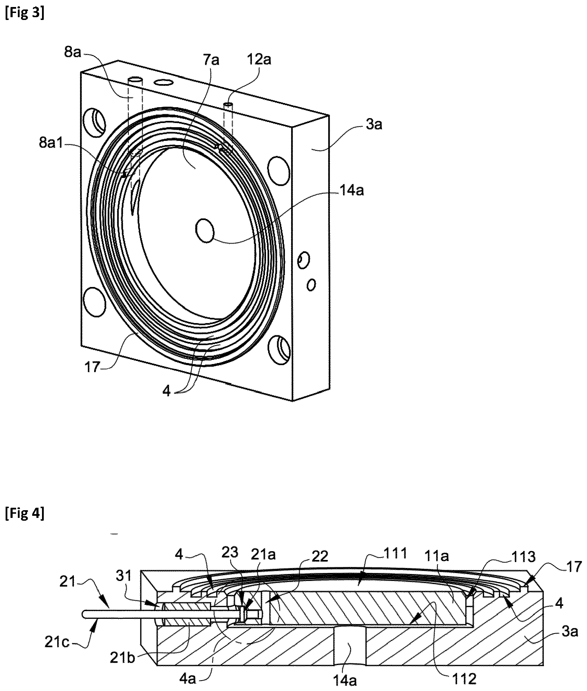

De plus, chacun desdits corps 3a et 3b comprend un canal de fluide, respectivement 8a et 8b (ce dernier n'étant pas représenté sur les figures), débouchant dans leur chambre de test respective 7a et 7b (le canal 8a est plus particulièrement visible à la figure 3).

On notera que dans une variante de réalisation non représentée, ledit au moins un des corps 3a et/ou 3b est réalisé par matriçage.

Lesdits canaux 8a et 8b permettent l'entrée ou l'évacuation de fluide respectivement dans les chambres de test 7a et 7b.

Chacun desdits canaux 8a et 8b débouche de préférence tangentiellement à la paroi du corps 3a ou 3b délimitant la chambre de test 7a ou 7b (un flux d'air débouchant tangentiellement à la paroi limite l'apparition d'un régime turbulent, facilitant le remplissage et la stabilisation).

Le capteur 1 comporte par ailleurs deux électrodes 11a et 11b logés respectivement dans les chambres de test 7a et 7b.

Lesdites électrodes 11a et 11b sont, d'une part, disposées en regard de ladite membrane 9 de manière à former un condensateur avec celle-ci, et d'autre part, fixées respectivement à la paroi de fond dudit corps 3a et 3b (la paroi de fond du logement étant la paroi opposée à la membrane). Le connecteur électrique 10 est, quant à lui, destiné, à transmettre des informations relatives à des grandeurs physiques des électrodes 11a et 11b (par exemple des valeurs de capacité électrique) du capteur 1 à des entités électroniques (non représentées) capables de les traiter.

Les électrodes 11a et 11b, dans le présent exemple de réalisation, sont de forme sensiblement cylindre ou de disque, et sont par exemple réalisées dans un matériau électriquement conducteur, tel que du laiton, du bronze, un alliage de cuivre...

Ainsi, chacune des électrodes 11a et 11b présente deux faces d'extrémités opposées et une face transversale reliant lesdites deux faces d'extrémités.

Les électrodes 11a et 11b sont ici avantageusement fixées auxdits corps 3a et 3b à l'aide d'une colle adaptée (l'une des faces d'extrémités de l'électrode est donc collée à la paroi de fond du corps). Chacun des corps 3a et 3b présente une ouverture traversante respectivement 14a et 14b qui débouche au niveau de l'électrode 11a ou 11b, plus particulièrement en regard de la face d'extrémité collée de l'électrode 11a ou 11b. Cette configuration permet ainsi à un opérateur de désolidariser plus facilement l'électrode 11a ou 11b du corps 3a ou 3b lors d'opérations de maintenance et/ou de reprise. Après vérification du bon montage de l'électrode, lesdites ouvertures traversantes 14a et 14b sont respectivement obturées par un bouchon 15a et 15b (lesdits bouchons assurant l'étanchéité desdits corps).

Ledit capteur 1 comprend au moins deux jeux 13 de deux joints d'étanchéité, respectivement 13a₁, 13a₂ et 13b₁, 13b₂, chaque jeu de joints étant disposé entre un desdits corps 3a ou 3b et la membrane 9.

Lesdits joints 13a₁₋₂ et 13b₁₋₂, généralement toriques, sont donc intercalés entre chacun desdits corps 3a et 3b et la membrane 9 (donc de chaque côté de la membrane) pour assurer l'étanchéité respective des chambres de test 7a et 7b. Plus particulièrement, des gorges circulaires 4 sont aménagées dans les corps 3a et 3b pour accueillir lesdits joints 13a₁₋₂ et 13b₁₋₂, facilitant le montage des joints, mais limitant également un déplacement radial des joints (dans une variante de réalisation non représentée, lesdites gorges sont aménagées dans la membrane). On notera ainsi qu'il y a deux joints (ou une paire de joints) 13a₁₋₂ ou 13b₁₋₂ disposés de part et d'autre de la membrane 9. Une paire de joints 13a₁₋₂ est donc contact avec le premier corps 3a, tandis qu'une autre paire de joints 13b₁₋₂ est en contact avec le deuxième corps 3b. Ainsi, on peut définir des volumes interjoints délimités par la membrane 9, une desdites paires de joints 13a₁₋₂ ou 13b₁₋₂ et un desdits corps 3a ou 3b.

Par ailleurs, l'un des corps 3a présente un organe 17 de mise sous tension de la membrane 9 (faisant saillie à la surface dudit corps) qui vient en appui sur la membrane 9 et la met sous tension. La membrane 9 comprend par exemple une gorge ou au moins une forme coopérant avec l'organe de mise sous tension du corps 3a. On notera que ledit organe 17 peut être également une pièce distincte dudit corps 3a, tel qu'une rondelle venant s'intercaler entre le corps 3a et la membrane 9. Lesdits corps 3a et 3b, en plus des canaux 8a et 8b d'amenée de fluide dans les chambres de test 7a et 7b, comprennent chacun un conduit, respectivement 12a et 12b (ce dernier n'étant pas représenté sur les figures), de fluide qui débouche respectivement entre les joints 13a₁₋₂ ou 13b₁₋₂. Lesdits canaux 8a, 8b et lesdits conduits 12a et 12b sont par exemple reliés à une vanne (non représentée) permettant de gérer les variations de pression appliquées aux différentes parties du capteur 1.

En effet, lesdits canaux 8a et 8b permettent notamment de faire varier la pression régnant entre les joints 13a₁₋₂ ou 13b₁₋₂ et de l'équilibrer avec la pression régnant dans la chambre de test 7a ou 7b.

On notera que les canaux 8a et 8b peuvent également comprendre une branche secondaire qui débouche respectivement au niveau du joint 13a₁ et 13b₂, la branche secondaire étant par exemple sensiblement perpendiculaire au canal 8a ou 8b (la branche secondaire 8a₁ du canal 8a du corps 3a est plus particulièrement illustrée à la figure 3).

La membrane 9 et lesdits corps 3a et 3b sont préférentiellement réalisés dans des matériaux des coefficients de dilatation thermique sensiblement égaux, tels que du bronze, un alliage bronze-béryllium et/ou de l'inox, etc.

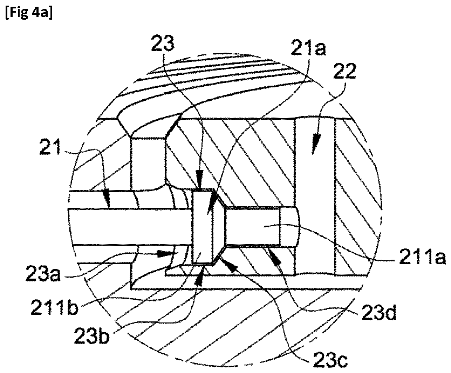

La figure 4 est, quant à elle, une représentation schématique, en coupe et agrandie, d'une des électrodes 11a du capteur de la figure 1, mais la description ci-après (comme les précédentes) s'applique également à l'autre électrode 11b du capteur 1.

Le capteur 1 comprend ainsi une tige de contact électrique 21 qui vient s'insérer dans l'électrode 11a (ou 11b) et traverse le corps 3a (ou 3b).

Les tiges 21 sont préférentiellement disposées du même côté du capteur 1, afin d'avoir un seul connecteur électrique 10 (par exemple une carte présentant des pistes électriques) auquel les tiges 21 sont reliées, et ainsi limiter la longueur des fils et/ou des pistes. En effet, la différence de pression entre les deux chambres 7a et 7b peut entraîner un déplacement très faible de la membrane 9, déplacement qui est traduit en une valeur de capacité électrique (exprimée en farad) par l'intermédiaire des électrodes 11a et 11b. Ainsi, il est avantageux d'avoir des circuits électriques les plus identiques et courts possibles, surtout pour des mesures de l'ordre du nanofarad.

Plus particulièrement, ladite électrode 11a comprend un trou traversant 22 s'étendant d'une face d'extrémité 111 à l'autre 112 et un logement 23 transversal s'étendant de la face radiale 113 de l'électrode 11a jusqu'au trou traversant 22 (ledit trou traversant 22 et le logement transversal 23 sont donc connectés fluidiquement).

Plus particulièrement visible à la figure 4a, le logement radial 23 présente différentes parties, l'entrée 23a du logement 23 est chanfreinée pour guider l'insertion de la tige 21 dans l'électrode 11a, suivie d'une partie droite intermédiaire 23b, puis à nouveau d'une partie chanfreinée intermédiaire 23c (faisant office de butée physique) prolongée d'une partie terminale droite 23d qui débouche dans le trou traversant 22.

La tige 21 présente ainsi une extrémité 21a venant s'insérer dans le logement 23, ladite extrémité 21a présente une section polygonale 211a, par exemple carrée, qui est montée serrée dans le logement 23, plus particulièrement dans la partie droite terminale 23d. On notera qu'il est avantageux que la section polygonale (section qui comporte donc plusieurs arêtes) soit montée serrée dans une partie terminale cylindrique afin d'assurer un bon contact électrique. L'extrémité 21a de la tige 21 comprend par ailleurs une couronne 211b, disposée en amont de la section polygonale 211a, qui joue le rôle de butée en venant en appui contre la partie chanfreinée intermédiaire 23c, favorisant par ailleurs le contact électrique entre ladite tige 21 et l'électrode 11a. La tige 21 comprend également un manchon 21b qui vient entourer une partie de la tige 21 et qui est destiné à obturer un trou traversant 31 aménagé dans lesdits corps 3a ou 3b pour pouvoir insérer la tige 21 dans une des électrodes 11a ou 11b.

Ledit manchon 21b est généralement réalisé en matière plastique et est fixé avec de la colle, ceci afin d'empêcher le déplacement de la tige 21, mais également pour assurer l'étanchéité des corps 3a ou 3b.

L'autre extrémité 21c de la tige 21 est, quant à elle, fixée au connecteur électrique 10.

La pièce d'interface 6 qui est montée sur lesdits corps 3a et 3b comprend des canaux de fluide reliés aux canaux 8a et 8b aménagés dans lesdits corps 3a, 3b et débouchant dans les chambres de test 7a et 7b. Lesdits canaux de fluide de la pièce d'interface comprennent par ailleurs un piège à eau (ou dispositif de rétention d'eau) qui est disposé dans lesdits canaux. On notera cependant que la pièce d'interface 6 est une pièce optionnelle qui permet le montage du capteur 1 selon l'invention dans des appareils de détection de fuite ne présentant pas forcément des structures d'accueil adaptées pour ledit capteur (orientation des canaux de fluide, des connecteurs électriques, etc.). Ainsi, lorsqu'on veut procéder au test d'étanchéité d'une pièce, chacune des chambres de test est reliée, par l'intermédiaire des canaux d'amenée de fluide, à une enceinte de test dans lesquelles sont disposées respectivement une pièce à tester et une pièce de référence. Les enceintes sont exposées à une variation de pression, et après une durée déterminée, chacune des chambres de test, isolées l'une de l'autre, présente alors des pressions différentes si la pièce à tester présente une fuite.

Il règne alors une pression supérieure dans une des chambres de test par rapport à l'autre, et il y a déplacement de la membrane sous l'effet de cette différence de pression.

Le déplacement de la membrane modifie alors la distance entre la membrane et les électrodes disposées dans lesdites chambres de test. On peut ainsi mesurer, par l'intermédiaire des tiges de contact, une variation de la capacité (plus particulièrement une différence) des condensateurs formés par lesdites électrodes avec la membrane. Cette configuration permet de mesurer de très faibles déplacements de la membrane et donc de petites variations de pression, variations de pression elles-mêmes relatives à des fuites (ou un niveau d'étanchéité de la pièce testée).

Il est donc critique de limiter la variation des volumes des chambres de test et/ou des volumes internes à la chambre de test, car ces variations de volumes peuvent être assimilées ou confondues avec des fuites.

Ainsi, le conduit 12a ou 12b de fluide disposé entre les deux joints, permet d'égaliser la pression entre la chambre de test 7a et 7b et le volume interjoint lors de la variation de pression appliquée à l'ensemble pièce à tester-chambre de test pour mesurer une fuite.

En effet, s'il n'y a qu'un seul joint pour assurer l'étanchéité de la chambre de test, lors de la variation de pression, l'une des faces est exposée à la pression atmosphérique, tandis que l'autre face est en dépression ou surpression par rapport à la pression atmosphérique. Cette différence de pression subie par le joint, peut entraîner sa déformation et/ou son déplacement sur des temps longs, ce qui va entraîner une modification du volume de la chambre de test (et donc faire varier la pression régnant dans la chambre de test).

Par ailleurs, la mise en communication du logement d'accueil de la tige avec le trou traversant, et la mise en communication du volume située entre l'électrode et la paroi de fond dudit corps et le volume principal de la chambre de test, permet d'éviter la formation de volumes captifs ou prisonniers difficilement accessibles. Ces volumes par leur accessibilité limitée peuvent se remplir et/ou se vider lentement et peuvent donc entraîner une variation de volume (et également de pression) de la chambre de test, imitant ainsi une fuite dans la pièce à tester et faussant la mesure de fuite réalisée.

## Revendications

1. Capteur (1) de pression différentielle pour dispositif de détection de fuite comprenant :
- au moins deux corps (3a, 3b) fixés l'un à l'autre dans lesquels une cavité (7) est aménagée ;
- une membrane (9) disposée entre les deux corps (3a, 3b) et séparant ladite cavité (7) de manière à définir une chambre de test (7a, 7b) dans chacun desdits corps (3a, 3b) ;
- au moins une électrode (11a, 11b) disposée dans chacune des chambres de test (7a, 7b) et en regard de ladite membrane (9) de manière à former un condensateur avec celle-ci ;
**caractérisé en ce que** ledit capteur (1) comprend au moins deux joints (13a₁, 13a₂, 13b₁, 13b₂) d'étanchéité disposés entre chacun desdits corps (3a, 3b) et la membrane (9) pour assurer l'étanchéité de chacune desdites chambres de test (7a, 7b) ;
et **en ce que** chacun des corps (3a, 3b) comprend au moins un conduit (12a, 12b) de fluide débouchant entre lesdits joints (13a₁, 13a₂, 13b₁, 13b₂), chacun desdits conduits (12a, 12b) permettant de faire varier la pression régnant entre lesdits joints et de l'équilibrer avec la pression régnant dans la chambre de test attenante (7a, 7b).

2. Capteur (1) selon l'une quelconque des revendications précédentes, **caractérisé en ce qu'**au moins une des électrodes (11a, 11b) présente, d'une part, deux faces d'extrémité opposées, l'une en regarde de la membrane (9) et l'autre fixée à l'un des corps (3a, 3b), et, d'autre part, une face transversale reliant lesdites faces d'extrémités.

3. Capteur (1) selon la revendication précédente, **caractérisé en ce qu'**au moins une des électrodes (11a, 11b) comprend un trou traversant (22) dont les extrémités débouchent au niveau des faces d'extrémités de l'électrode (11a, 11b).

4. Capteur selon l'une quelconque des revendications précédentes, **caractérisé en ce qu'**au moins une électrode (11a, 11b) comprend un logement transversal (23) destiné à accueillir une tige (21) de contact électrique.

5. Capteur selon les revendications 3 et 4, **caractérisé en ce que** le trou traversant (22) et le logement transversal (23) communiquent, notamment fluidiquement, l'un avec l'autre.

6. Capteur selon l'une quelconque des revendications précédentes, **caractérisé en ce qu'**au moins un desdits corps (3a, 3b) est réalisé par matriçage.

7. Capteur selon l'une quelconque des revendications précédentes, **caractérisé en ce qu'**il comprend une tige (11) de contact électrique en contact avec ladite électrode (11a, 11b).

8. Capteur selon la revendication précédente, **caractérisé en ce que** ladite tige (21) comprend une extrémité (21a) présentant une section de forme polygonale.

9. Capteur selon l'une quelconque des revendications précédentes, **caractérisé en ce qu'**au moins un desdits corps (3a, 3b) comprend un canal (8a, 8b) de fluide débouchant dans la chambre de test (7a, 7b).

10. Capteur selon l'une quelconque des revendications précédentes, **caractérisé en ce qu'**il comprend une pièce d'interface (6) qui est montée sur lesdits corps (3a, 3b) et qui comprend des canaux de fluide dans lesquels sont disposés au moins un piège à d'eau.

11. Dispositif de détection de fuites, **caractérisé en ce qu'**il comprend un capteur selon l'une quelconque des revendications précédentes.

## Patentansprüche

1. Differenzdrucksensor (1) für eine Leckdetektionsvorrichtung, umfassend:
- mindestens zwei Körper (3a, 3b), die aneinander befestigt sind und in denen ein Hohlraum (7) ausgebildet ist;
- eine Membran (9), die zwischen den beiden Körpern (3a, 3b) angeordnet ist und den Hohlraum (7) trennt, um eine Testkammer (7a, 7b) in jedem der Körper (3a, 3b) zu definieren;
- mindestens eine Elektrode (11a, 11b), die in jeder der Testkammern (7a, 7b) und gegenüber der Membran (9) angeordnet ist, so dass sie mit dieser einen Kondensator bildet;
**dadurch gekennzeichnet, dass** der Sensor (1) mindestens zwei Dichtungen (13a₁, 13a₂, 13b₁, 13b₂) umfasst, die zwischen jedem der Körper (3a, 3b) und der Membran (9) angeordnet sind, um die Dichtigkeit jeder der Testkammern (7a, 7b) zu gewährleisten;
und dass jeder der Körper (3a, 3b) mindestens eine Fluidleitung (12a, 12b) umfasst, die zwischen den Dichtungen (13a₁, 13a₂, 13b₁, 13b₂) mündet, wobei jede dieser Leitungen (12a, 12b) es ermöglicht, den zwischen den Dichtungen herrschenden Druck zu variieren und ihn mit dem in der angrenzenden Testkammer (7a, 7b) herrschenden Druck auszugleichen.

2. Sensor (1) nach einem der vorhergehenden Ansprüche, **dadurch gekennzeichnet, dass** mindestens eine der Elektroden (11a, 11b) einerseits zwei gegenüberliegende Endflächen aufweist, von denen eine der Membran (9) zugewandt und die andere an einem der Körper (3a, 3b) befestigt ist, und andererseits eine Querfläche aufweist, die die Endflächen miteinander verbindet.

3. Sensor (1) nach dem vorhergehenden Anspruch, **dadurch gekennzeichnet, dass** mindestens eine der Elektroden (11a, 11b) ein Durchgangsloch (22) aufweist, dessen Enden an den Endflächen der Elektrode (11a, 11b) münden.

4. Sensor nach einem der vorhergehenden Ansprüche, **dadurch gekennzeichnet, dass** mindestens eine Elektrode (11a, 11b) eine Queraufnahme (23) zur Aufnahme eines elektrischen Kontaktstifts (21) aufweist.

5. Sensor nach Anspruch 3 und 4, **dadurch gekennzeichnet, dass** das Durchgangsloch (22) und die Queraufnahme (23) miteinander in Verbindung stehen, insbesondere fluidisch miteinander verbunden sind.

6. Sensor nach einem der vorhergehenden Ansprüche, **dadurch gekennzeichnet, dass** mindestens einer der Körper (3a, 3b) durch Gesenkschmieden hergestellt ist.

7. Sensor nach einem der vorhergehenden Ansprüche, **dadurch gekennzeichnet, dass** er einen elektrischen Kontaktstift (11) umfasst, der mit der Elektrode (11a, 11b) in Kontakt steht.

8. Sensor nach dem vorhergehenden Anspruch, **dadurch gekennzeichnet, dass** der Stift (21) ein Ende (21a) mit einem polygonal geformten Querschnitt aufweist.

9. Sensor nach einem der vorhergehenden Ansprüche, **dadurch gekennzeichnet, dass** mindestens einer der Körper (3a, 3b) einen Fluidkanal (8a, 8b) umfasst, der in die Testkammer (7a, 7b) mündet.

10. Sensor nach einem der vorhergehenden Ansprüche, **dadurch gekennzeichnet, dass** er ein Schnittstellenteil (6) umfasst, das an den Körpern (3a, 3b) angebracht ist und das Fluidkanäle umfasst, in denen mindestens eine Wasserfalle angeordnet ist.

11. Vorrichtung zur Detektion von Lecks, **dadurch gekennzeichnet, dass** sie einen Sensor nach einem der vorhergehenden Ansprüche umfasst.

## Claims

1. Differential pressure sensor (1) for a leak detection device comprising:
- at least two bodies (3a, 3b) fastened to each other in which a cavity (7) is created;
- a membrane (9) that is arranged between the two bodies (3a, 3b) and separates said cavity (7) so as to define a test chamber (7a, 7b) in each one of said bodies (3a, 3b);
- at least one electrode (11a, 11b) arranged in each one of the test chambers (7a, 7b) and facing said membrane (9) so as to form therewith a capacitor;
**characterised in that** said sensor (1) comprises at least two seals (13a₁, 13a₂, 13b₁, 13b₂) arranged between each of said bodies (3a, 3b) and the membrane (9) to ensure the tightness of each of said test chambers (7a, 7b);
and **in that** each of the bodies (3a, 3b) comprises at least one fluid duct (12a, 12b) opening between said seals (13a₁, 13a₂, 13b₁, 13b₂), each of said ducts (12a, 12b) allowing to vary the pressure prevailing between said seals and to balance it with the pressure prevailing in the adjoining test chamber (7a, 7b).

2. The sensor (1) according to any one of the preceding claims, **characterised in that** at least one of the electrodes (11a, 11b) has, on the one hand, two opposite end faces, one facing the membrane (9) and the other fastened to one of the bodies (3a, 3b), and, on the other hand, a transverse face connecting said end faces.

3. The sensor (1) according to the preceding claim, **characterised in that** at least one of the electrodes (11a, 11b) comprises a through hole (22) whose ends open at the end faces of the electrode (11a, 11b).

4. The sensor according to any one of the preceding claims, **characterised in that** at least one electrode (11a, 11b) comprises a transverse housing (23) intended to accommodate an electrical contact rod (21).

5. The sensor according to claims 3 and 4, **characterised in that** the through hole (22) and the transverse housing (23) communicate, in particular fluidly, with each other.

6. The sensor according to any one of the preceding claims, **characterised in that** at least one of said bodies (3a, 3b) is produced by die-stamping.

7. The sensor according to any one of the preceding claims, **characterised in that** it comprises an electrical contact rod (11) in contact with said electrode (11a, 11b).

8. The sensor according to the preceding claim, **characterised in that** said rod (21) comprises an end (21a) having a polygonal shape.

9. The sensor according to any one of the preceding claims, **characterised in that** at least one of said bodies (3a, 3b) comprises a fluid channel (8a, 8b) opening into the test chamber (7a, 7b).

10. The sensor according to any one of the claims, **characterised in that** it comprises an interface part (6) which is mounted on said bodies (3a, 3b) and which comprises fluid channels wherein at least one water trap is arranged.

11. A leak detection device, **characterised in that** it comprises a sensor according to any one of the preceding claims.
